## Europäisches Patentamt
## European Patent Office
## Office européen des brevets

(11) Publication number: **0 119 479**
**B1**

# (12) EUROPEAN PATENT SPECIFICATION

(45) Date of publication of patent specification: **21.02.90**

(51) Int. Cl.5: **A 61 K 9/00, A 61 K 47/00**

(21) Application number: **84101617.3**

(22) Date of filing: **16.02.84**

(54) Dry mix cellulose ether compositions as bulk laxatives.

(30) Priority: **17.02.83 US 467411**
**10.01.84 US 568818**

(43) Date of publication of application:
**26.09.84 Bulletin 84/39**

(45) Publication of the grant of the patent:
**21.02.90 Bulletin 90/08**

(84) Designated Contracting States:
**AT BE CH DE FR GB IT LI LU NL SE**

(56) References cited:
**DE-A- 973 095**
**GB-A- 992 999**
**US-A-2 701 782**
**US-A-3 076 709**

**CHEMICAL ABSTRACTS, vol. 93, no. 12, September 22, 1980, page 341, ref.no. 120324a, Columbus, Ohio, US; F. DIMA et al.: "Comparative study of the interaction of paraffin oil with methylcellulose and sodium carboxymethylcellulose during the emulsion process" & Rev. Med.-Chir. 1979, 83(4), 683-6**

The file contains technical information submitted after the application was filed and not included in this specification

(73) Proprietor: **MERRELL DOW PHARMACEUTICALS INC.**
**2110 East Galbraith Road**
**Cincinnati Ohio 45215-6300 (US)**

(72) Inventor: **Tobey, Stephen W.**
**4201 Congress Drive**
**Midland Michigan 48640 (US)**
Inventor: **Tomalia, Donald A.**
**463 W. Chippewa River Road**
**Midland Michigan 48640 (US)**
Inventor: **Luoma, Eric V.**
**3712 Jefferson**
**Midland Michigan 48640 (US)**

(74) Representative: **Vossius & Partner**
**Siebertstrasse 4 P.O. Box 86 07 67**
**D-8000 München 86 (DE)**

## Description

### Background of the Invention

This invention relates to dry mix cellulose ether bulk laxative compositions.

It has been long known that cellulose ethers such as carboxymethylcellulose and methylcellulose are effective bulk laxatives. The cellulose ethers relieve constipation by increasing the bulk of the stool, increasing the water content of the stool, and it is believed, by a lubricating effect on the stool.

Previously, cellulose ethers have been administered as bulk laxatives in the form of tablets, powders, and suspensions in highly concentrated sugar solutions. Each of these methods of administration has significant disadvantages which have limited the acceptance of these products by consumers.

Tableted cellulose ethers, for example, do not readily dissolve in the digestive tract because these cellulose ethers are highly hygroscopic. The outer portion of the tablet quickly forms a gel-like hydrate which prevents break up of the tablet and greatly retards hydration of the interior portions of the tablet. Accordingly, the tablet is often excreted as an intact soft gel mass. Although some laxative effect is produced by such gel masses, the cellulose ether is most effective when dispersed uniformly throughout the stool. Thus, when employed in tablet form, cellulose ethers have reduced efficacy as bulk laxatives.

Cellulose ethers have also been administered as powders, which powders are swallowed by the patient. Such powders often exhibit the same type of gelation as tablets, i.e., the individual particles lump together and remain partially undissolved as they pass through the digestive tract. Moreover, administration of cellulose ethers in powder form has caused nausea, cramping and vomiting in some patients. Accordingly, cellulose ethers are not advantageously administered in powder form.

Cellulose ethers have also been administered as bulk laxatives as suspensions of the cellulose ether in water containing high concentrations of sucrose or other sugars and a flavoring. See, for example, U.S. Patent No. 2,701,782 in which such suspensions are described. The sugar competes with the cellulose ether for the available water, thereby preventing the cellulose ether from hydrating sufficiently to form gels. Such suspensions are prepared by first preparing a concentrated sugar solution in water. The cellulose ether is essentially insoluble in such a concentrated sugar solution and, accordingly, cannot hydrate to form lumps and gels. The administration of cellulose ethers in such form has the advantage that the cellulose ether is sufficiently dispersed that it does not form significant amounts of lumps in the digestive tract. Unfortunately, however, such suspensions are very thick and semi-gelatinous. As such, they are visually unappealing. More significantly, due to their slimy mouth feel and extreme sweetness, such suspensions are quite unpalatable. Accordingly, such cellulose ether suspensions have not gained significant consumer acceptance. Moreover, in U.S. Patent No. 2,701,782 it is taught that only very concentrated cellulose ether dispersions, e.g., 10 percent w/vol. dispersions are useful as bulk laxative compositions.

US—A—076 709 discloses a dispersible dry food base composition consisting of a water-soluble dry milk product and a non-ionic alkyl ether of cellulose. DE—A—973 095 discloses a method of spray-drying oil-in-water emulsions the aqueous phase of which contains cellulose ether. GB—A—992 999 relates to unctuous creams and pastes containing carboxymethyl cellulose.

It is the object of this invention to provide a cellulose ether composition useful as a bulk laxative, which composition is palatable and not visually displeasing and which is administered without the formation of significant amounts of lumps or gels.

### Summary of the Invention

The present invention is such a bulk laxative composition. This invention is a particulate cold-water-dispersible and essentially milk-solid free dry mix bulk laxative composition comprising

(a) 2 parts by weight of a water-soluble, particulate cellulose ether selected from methyl cellulose or hydroxypropylmethyl cellulose; and

(b) from 10 to 30 parts by weight of a dry, particulate natural sugar.

It has been found that when the bulk laxative compositions of this invention are mixed with water to provide for from 0.25 to 8.0 grams of the cellulose ether in from 124—498 g (4 to 16 ounces) of water the resulting mixture is palatable and smooth without substantial amounts of lumps or gels, and, when ingested by the patient, delivers a therapeutically effective dose of the cellulose ether. Because such mixtures containing the bulk laxative compositions of this invention are palatable, patients are more likely to take these laxatives regularly as prescribed. Furthermore, because of the uniform dispersion of the cellulose ether in the aqueous liquid, the cellulose ether is adminstered in a form in which it is most effectively employed.

An additional advantage of the bulk laxatives of this invention is that ordinary administration thereof causes the patient to ingest significant quantities of fluids. Such simultaneous ingestion of fluids is generally recognized as necessary for proper functioning of a bulk laxative.

### Detailed Description of the Invention

The cellulose ether employed herein is a water-soluble cellulose ether which is effective as an active agent in a bulk laxative. By "effective as an active agent in a bulk laxative" is meant that the cellulose ether measurably increases the bulk, water content and/or the frequency of the stools of patients to whom it is administered.

This invention is particularly useful since the cellulose ether used is one which is soluble, poorly dispersible in cold water but readily dispersible in hot water, i.e. methylcellulose or hydroxypropylmethylcellulose. The molecular weight of the cellulose ether is not especially critical.

Methylcellulose and hydroxypropylmethyl cellulose are useful due to their non-ionic character and their inverse solubility in water.

Because an effective dose of the cellulose ether may be administered in either a single application or a plurality of applications, for the purposes of this invention, a therapeutically effective amount of the cellulose ether is considered to be from 0.25 to 8, preferably 1 to 4, grams of the cellulose ether per administration. Of course, the effective amount of cellulose ether may vary somewhat depending on factors such as the size, age and sex of the patient, and the severity of the problem to be treated. Since multiple doses of the bulk laxative are commonly and often advantageously administered to the patient, relatively small amounts, i.e., 0.25 to 3 grams of the cellulose ether may be taken in each dose. However, larger amounts of the cellulose ether may be contained in a dose if only a single daily dose of the bulk laxative is to be taken. When less than about 0.25 gram of the cellulose ether is taken in a single dose, the large number of doses required to administer a therapeutically effective amount of the cellulose ether tends to lead to poor patient compliance. Ingestion of large amounts of the cellulose ether (i.e., above about 8 grams per dose) generally does not increase the efficacy of the cellulose ether and is therefore not preferred.

The cellulose ether is present in the bulk laxative compositions of this invention in a particulate form, such that the cellulose ether can be readily dispersed in water without the formation of significant amounts of gels and lumps. Generally, the particles are of a size such that upon contact with water, hydration of the interior regions of the particle occurs in a short period of time, i.e., one minute or less. Preferably, the cellulose ether is in the form of a powder having a volume average particle diameter of less than about 400, preferably less than 250, μm (1 μm = 0.001 mm).

A dispersing/sweetening component is also employed in the bulk laxative composition of this invention. The purpose of the dispersing/sweetening component is to (a) sweeten aqueous dispersions containing the bulk laxative compositions of this invention and (b) to render the cellulose ether dispersible in an aqueous liquid in which the cellulose ether is soluble under conditions of mild agitation.

The essential ingredient of the dispersing/sweetening component is a sweetener. Said sweetener is a natural sugar, such as sucrose, glucose, fructose and corn syrup solids. The natural sugar is employed in an amount sufficient to impart to the bulk laxative composition the desired dispersibility.

10—30 grams of a natural sugar are advantageously employed per 2 grams of the cellulose ether.

Also useful as other ingredient in the dispersing/sweetening component are edible, hydrophobic oils such as mineral oils, silicone oils such as polydimethylsiloxane, silica modified silicone oils, natural vegetable oils such as corn oil and sunflower oil, coconut oil, partially hydrogenated vegetable oils, and oily flavorings such as limonene. Such oils generally coat the surface of and are somewhat adsorbed by cellulose ether particles. When said oils are employed as other ingredient in the dispersing/sweetening component, said oils are present in an amount sufficient to improve the dispersibility of the cellulose ether.

The critical limitation of the maximum amount of said oils which can be employed herein is that the bulk laxative composition of this invention is a dispersible particulate solid. The amount of such oil employed herein is less than that amount which causes excessive clumping of the cellulose ether particles or creates a continuous oil phase. By "excessive clumping" is meant that such clumps do not readily disperse is cold water with mild agitation. Preferably, the amount of such hydrophobic oil employed is no more than that amount which coats and/or is absorbed by the cellulose ether particles. Generally, such a hydrophobic oil is employed in an amount in the range from 0.5 to 25 percent based on the weight of the cellulose ether. The use of such hydrophobic oil as other ingredient has the advantages that (a) lesser amounts of sweeteners and additional other ingredients are often needed, since dispersion of the cellulose ether is improved with the hydrophobic oil and (b) certain hydrophobic oils, such as mineral oil, are themselves effective active agents in laxative compositions, and therefore increase the efficacy of the compositions of this invention.

In addition to the foregoing, the bulk laxative compositions of this invention optionally, but preferably, comprise a small amount of a flavoring, such as strawberry, orange, grape, raspberry, lemon, lime, cherry, licorice, spearmint, wintergreen, chocolate, eggnog, butterscotch, vanilla and bannana. Such natural and artificial flavorings are well known and all are suitably employed herein. Citric acid is commonly employed in conjuction with fruit flavorings. The flavoring is generally present only as a minor component of the bulk laxative composition, generally, conprising less than about 5, preferably less than about 2, weight percent of the composition. Such flavoring can be incorporated into the dispersing composition, into the cellulose ether or into the previously blended mixture of cellulose ether and dispersing composition. Liquid or oily flavors may be employed herein so long as they are thoroughly mixed with the other components of the bulk laxative in a way that the bulk laxative composition is a dispersible particulate. Such oily flavorings often improve the dispersibility of the cellulose ether due to their hydrophobic character. If desired, the flavoring may be borne on a particulate carrier therefor.

In addition to the foregoing other materials, such as preservatives, buffers, colorings, anti-caking agents, antioxidants, opacifiers, vitamins and minerals, and setting agents, which are commonly employed in food, beverage or drug substances may be employed herein in conventional manner.

The bulk laxative compositions of this invention are prepared by simple admixture of the components. Hydrophobic oils or oily flavorings, if employed, are advantageously admixed with the cellulose ether before the addition of the remaining ingredients. However, the order of addition of components is not especially critical as long as any oily or liquid flavorings are sufficiently mixed into the composition such that the composition is a dispersible particulate.

If desired, many commercially available powdered drink are advantageously employed herein as flavored dispersing/sweetening components. For example, powdered breakfast drinks, or powdered sweetened fruit drinks may be admixed as packaged with the cellulose ether to form a flavored bulk laxative composition according to this invention. The amount of cellulose ether blended therewith is chosen such that a dispersible composition is obtained.

For the purposes of this invention, the bulk laxative composition is sufficiently dispersible if an amount thereof containing a therapeutically effective amount of the cellulose ether can be dispersed into 498g (16 ounces) or less of a cold aqueous liquid in which the cellulose ether is soluble, without forming significant lumps or gels under the conditions of agitation provided either by spoon stirring or by an ordinary home mixer operated at low speed. Preferably, the composition can be dispersed by hand stirring to form a smooth, lump-free dispersion.

Preferably, the bulk laxative composition is dispersible in 249 g (8 ounces) or less of the cold liquid. It is understood that the amount of cold liquid employed will depend somewhat on the amount of cellulose ether to be dispersed. When large amounts of the cellulose ether, e.g., 4 grams (g) or more, are to be disposed, generally larger amounts, e.g., 249—498 g (8—16 ounces) of cold liquid are required to disperse the bulk laxative composition. In the more preferred embodiment, wherein a single administration of the bulk laxative composition contains from 1—4 g of the cellulose ether, the bulk laxative composition is preferably dispersed into 8 ounces or less of cold liquid. A cold liquid, for the purposes of this invention, means that the liquid is at a temperature below the cloud point of the cellulose ether employed in the bulk laxative composition, preferably at a temperature below about 30°C. When the cellulose ether employed does not exhibit a cloud point, a cold liquid is taken to mean a liquid having a temperature below 60°C, preferably below 30°C. "Cloud point," as that term is employed herein, means that temperature at which an aqueous solution containing 2 weight percent of the cellulose ether transmits 50 percent of the light transmitted by such solution at 20°C.

The bulk laxative compositions of this invention are employed by mixing an amount thereof which contains a therapeutically effective dose of the cellulose ether and about 498 g (16 ounces) or less of an aqueous liquid such as water, milk or other suitable liquid. As discussed hereinbefore, a quantity of the bulk laxative composition containing a therapeutically effective dose, i.e., 0.25—8 g of cellulose ether, which additionally contains typically from 10—30 g of dispersing/sweetening component per 2 g of cellulose ether, is dispersed in 124 to 498 g (4 to 16 ounces) of the aqueous liquid. After these compositions are dispersed in such liquid, the resulting dispersion is then drunk or eaten by the patient. Mixtures of the bulk laxatives of this invention with milk, water or other suitable liquid are smooth, palatable, and essentially free of unpleasant gels and lumps.

As mentioned hereinbefore, the amount of the cellulose ether present in each dose, as well as the number of doses of the bulk laxative taken per day, will depend somewhat on the age, sex, size of the patient, severity of the patient's particular problem, the advice of the treating physician, if any, and the particular taste and habits of the patient. Accordingly, the bulk laxatives of this invention are advantageously administered in a single dose containing as much as about 8 grams of the cellulose either, or in a plurality of small doses containing as little as 0.25 gram of the cellulose ether per dose. Most preferably, however, the bulk laxatives of this invention are taken as a single dose containing 2—4 grams of the cellulose ether, or as two or more doses each containing 1—3 grams of the cellulose ether.

The following examples are intended to illustrate the invention but not to limit the scope thereof. All parts and percentages are by weight unless otherwise indicated.

Example 1

In this example, 2 grams of a powdered pharmaceutical grade methylcellulose having a 2 percent solution viscosity of 4000 mPa·s is dry blended with 26 grams of Tang® brand instant breakfast drink (distributed by General Foods Corporation, White Plains, NY). A free flowing powder is obtained. This powder is then stirred into about 249 g (8 fluid ounces) of room temperature tap water. The dry bulk laxative composition mixes readily into the water forming a palatable, smooth-textured drink containing a therapeutically effective amount of methylcellulose as a bulking laxative agent.

The foregoing process is repeated substituting for the Tang equal amounts of various commercially available orange flavored, powdered, instant breakfast drinks. In each case, a smooth, palatable drink containing a therapeutically effective amount of methylcellulose is obtained.

### Example 2

A 2-gram portion of food grade hydroxypropylmethylcellulose having a 2 percent solution viscosity of 100,000 mPa·s is mixed with 26 grams of Tang® brand instant breakfast drink. The resulting powder is mixed with about 249 g (8 ounces) of tap water at room temperature and is found to mix easily with the water forming a gel-free, palatable drink containing a therapeutically effective amount of cellulose ether. Equivalent results are obtained by substituting Minute Maid brand Lemonade Crystals for the Tank brand instant breakfast drink.

### Example 3

Fifteen grams of granulated cane sugar are mixed with 2 grams of hydroxypropylmethylcellulose (2 percent solution viscosity equals 4,000). The resulting powdery mixture is spoon-stirred into 187 g (6 ounces) of water to form a smooth, substantially taste-free laxative. In this example, sugar is the sole dispersant for the bulk laxative composition.

### Example 4

Into 249 g (8 ounces) of cold tap water are stirred 22.0 g of a commercially available dry powder orange flavor instant breakfast drink. To the resulting solution are added 2 g of a methylcellulose as described in Example 1. Despite vigorous stirring the methylcellulose agglomerates into gelatinous lumps, which cannot be dispersed by hand stirring. It is seen, therefore, that using the levels of dispersing/sweetening component employed in this invention, it is critical to pre-mix the cellulose ether with the dispersing/sweetening component to prepare the bulk laxative composition.

### Example 5

Eight grams of methylcellulose, as described in Example 1, are dry-mixed with 73 g of a commercially available vanilla flavored instant breakfast drink. To the resulting dry-mix bulk laxative composition are added 498 g (16 ounces) of cold milk. With stirring, a lump-free composition resembling a milkshake in texture and consistency is obtained.

**Claims for the Contracting States: BE CH DE FR GB IT LI LU NL SE**

1. A particulate cold-water-dispersible and essentially milk-solid free dry mix bulk laxative composition comprising
(a) 2 parts by weight of a water-soluble, particulate cellulose ether selected from methyl cellulose or hydroxypropylmethyl cellulose; and
(b) from 10 to 30 parts by weight of a dry, particulate natural sugar.
2. A composition of claim 1 wherein the cellulose ether is methyl cellulose and wherein the natural sugar is sucrose.
3. The bulk laxative composition of Claim 1 further comprising a flavoring.

4. A process for preparing an aqueous dispersion of a water-soluble cellulose ether selected from methyl cellulose and hydroxypropyl methylcellulose in cold water requiring only mild agitation which comprises first preparing a mixture comprised of 2 parts by weight of a cellulose ether and from 10 to 30 parts by weight of a natural sugar and subsequently adding the dry, particulate mixture to water to provide for from 0.24 to 8.0 grams of the cellulose ether in from 4 to 16 ounces of water.
5. A process according to claim 4 whereby the mixture further contains 0.5 to 25 percent based on the weight of the cellulose ether of a hydrophobic, edible oil.
6. A process of claims 4 or 5 wherein the cellulose ether is methylcellulose.
7. A process of claims 4 to 5 wherein the natural sugar is sucrose.

**Claims for the Contacting State: AT**

1. A process for preparing a particulate cold-water-dispersible and essentially milk-solid free dry mix bulk laxative composition comprising
(a) 2 parts by weight of a water-soluble, particulate cellulose ether selected from methyl cellulose or hydroxypropylmethyl cellulose; and
(b) from 10 to 30 parts by weight of a dry, particulate natural sugar, which comprises first preparing a mixture comprised of 2 parts by weight of the cellulose ether and from 10 to 30 parts by weight of the natural sugar and subsequently adding the dry, particulate mixture to water to provide for from 0.25 to 8.0 grams of the cellulose ether in from 4 to 16 ounces of water.
2. A process according to claim 1 whereby the mixture further contains 0.5 to 25 percent based on the weight of the cellulose ether of a hydrophobic, edible oil.
3. A process of claims 1 or 2 wherein the cellulose either is methylcellulose.
4. A process of claims 1 or 2 wherein the natural sugar is sucrose.
5. A process according to claim 1 whereby the bulk laxative composition further comprises a flavoring.

**Patentansprüche für die Vertragsstaaten: BE CH DE FR GB IT LI LU NL SE**

1. Teilchenförmige, in kaltem Wasser dispergierbare und im wesentlichen von Milchtrockenmasse freie Trockenmischung als ballaststoffhaltiges Abführmittel, umfassend
(a) 2 Gew.-Teile eines wasserlöslichen, teilchenförmigen Celluloseäthers, der ausgewählt wird aus Methylcellulose oder Hydroxypropylmethylcellulose; und
(b) 10 bis 30 Gew.-Teile eines trockenen, teilchenförmigen natürlichen Zuckers.
2. Abführmittel nach Anspruch 1, bei dem der Celluloseäther Methylcellulose ist, und bei dem der natürliche Zucker Saccharose ist.
3. Ballaststoffhaltiges Abführmittel nach Anspruch 1, welches ferner einen Geschmacksstoff umfaßt.

4. Verfahren zur Herstellung einer wäßrigen Dispersion eines wasserlöslichen Celluloseäthers, der ausgewählt wird aus Methylcellulose und Hydroxypropylmethylcellulose in kaltem Wasser, welche lediglich schwaches Rühren erfordert, wobei man zunächst ein Gemisch, welches 2 Gew.-Teile eines Celluloseäthers und 10 bis 30 Gew.-Teile eines natürlichen Zuckers umfaßt, herstellt und anschließend das teilchenförmige Gemisch in Wasser einbringt, um 0,25 bis 8,0 g des Celluloseäthers in 124 bis 498 g (4 bis 16 Unzen) Wasser bereitzustellen.

5. Verfahren nach Anspruch 4, bei dem das Gemisch ferner 0,5 bis 25%, basierend auf dem Gewicht des Celluloseäthers, eines hydrophoben genießbaren Öls enthält.

6. Verfahren nach Anspruch 4 oder 5, bei dem der Celluloseäther Methylcellulose ist.

7. Verfahren nach Anspruch 4 oder 5, bei dem der natürliche Zucker Saccharose ist.

**Patentansprüche für den Vertragsstaat: AT**

1. Verfahren zur Herstellung einer teilchenförmigen, in kaltem Wasser dispergierbaren und im wesentlichen von Milchtrockenmasse freien Trockenmischung als ballaststoffhaltiges Abführmittel, welches

(a) 2 Gew.-Teile eines wasserlöslichen, teilchenförmigen Celluloseäthers, der ausgewählt wird aus Methylcellulose oder Hydroxypropylmethylcellulose; und

(b) 10 bis 30 Gew.-Teile eines trockenen, teilchenförmigen Zuckers enthält, wobei man zunächst ein Gemisch, welches 2 Gew.-Teile des Celluloseäthers und 10 bis 30 Gew.-Teile des natürlichen Zuckers umfaßt, herstellt, und anschließend das teilchenförmige Gemisch in Wasser einbringt, um 0,25 bis 8,0 g des Celluloseäthers in 124 bis 498 g (4 bis 16 Unzen) Wasser bereitzustellen.

2. Verfahren nach Anspruch 1, bei dem das Gemisch ferner 0,5 bis 25%, basierend auf dem Gewicht des Celluloseäthers, eines hydrophoben genießbaren Öls enthält.

3. Verfahren nach Anspruch 1 oder 2, bei dem der Celluloseäther Methylcellulose ist.

4. Verfahren nach Anspruch 1 oder 2, bei dem der natürliche Zucker Saccharose ist.

5. Verfahren nach Anspruch 1, bei dem das ballaststoffhaltige Abführmittel ferner einen Geschmacksstoff umfaßt.

**Revendications pour les Etats contractants: BE CH DE FR GB IT LI LU NL SE**

1. Composition de laxatif gonflant sous forme de mélange sec dispersible dans l'eau froide et essentiellement dépourvu de solides du lait comprenant

(a) deux parties en poids d'un éther cellulosique particulaire hydrosoluble choisi parmi la méthylcellulose ou l'hydroxypropylméthylcellulose; et

(b) de 10 à 30 parties en poids d'un sucre naturel sec particulaire.

2. Composition selon la revendication 1 dans laquelle l'éther cellulosique est la méthylcellulose et dans laquelle le sucre naturel est le saccharose.

3. Composition de laxatif gonflant selon la revendication 1 comprenant en outre un parfum.

4. Procédé de préparation d'une dispersion aqueuse d'un éther cellulosique hydrosoluble choisi parmi la méthylcellulose et l'hydroxypropylméthylcellulose dans l'eau froide nécessitant seulement, une agitation douce qui comprend tout d'abord la préparation d'un mélange constitué par deux parties en poids d'un éther cellulosique et par 10 à 30 parties en poids d'un sucre naturel puis l'addition du mélange sec particulaire à de l'eau pour obtenir de 0,25 à 8,0 g de l'éther cellulosique dans 124—498 g (4 à 16 onces) d'eau.

5. Procédé selon la revendication 4 dans lequel le mélange contient en outre de 0,5 à 25% sur la base du poids de l'éther cellulosique d'une huile hydrophobe comestible.

6. Procédé selon les revendications 4 ou 5 dans lequel l'éther cellulosique est la méthylcellulose.

7. Procédé selon les revendications 4 ou 5 dans lequel le sucre naturel est le saccharose.

**Revendications pour l'Etat contractant: AT**

1. Procédé de préparation d'une composition de laxatif gonflant sous forme de mélange sec particulaire dispersible dans l'eau froide et essentiellement dépourvu de solides du lait comprenant

(a) deux parties en poids d'un éther cellulosique particulaire hydrosoluble choisi parmi la méthylcellulose ou l'hydroxypropylméthylcellulose; et

(b) de 10 à 30 parties en poids d'un sucre naturel sec particulaire, qui comprend tout d'abord la préparation d'un mélange constitué par deux parties en poids de l'éther cellulosique et par 10 à 30 parties en poids du sucre naturel puis l'addition du mélange sec particulaire à de l'eau pour obtenir de 0,25 à 8,0 g de l'éther cellulosique dans 124—498 g (4 à 16 onces) d'eau.

2. Procédé selon la revendication 1 dans lequel le mélange contient en outre de 0,5 à 25% sur la base du poids de l'éther cellulosique d'une huile hydrophobe comestible.

3. Procédé selon la revendication 1 ou 2 dans lequel l'éther cellulosique est la méthylcellulose.

4. Procédé selon les revendications 1 ou 2 dans lequel le sucre naturel est le saccharose.

5. Procédé selon la revendication 1 dans lequel la composition de laxatif gonflant comprend en outre un parfum.